# DEMANDE DE BREVET EUROPEEN

(11) **EP 3 753 790 A1**
(43) Date de publication de la demande: **23.12.2020**
(21) Numéro de dépôt: 20177010.4
(22) Date de dépôt: 28.05.2020
(51) Int. Cl.: B60R 11/04, B60R 13/02, B60J 1/18, B60J 5/10

(54) **HABILLAGE INTÉRIEUR D'OUVRANT DE VÉHICULE SUPPORTANT UNE CAMÉRA**

(30) Priorité: 19.06.2019 FR 1906613
(71) Demandeur: Renault S.A.S., 92100 Boulogne-Billancourt (FR)
(72) Inventeur: DURAIN, vincent, 78990 ELANCOURT (FR); SEIGNEUR, QUENTIN, 78000 VERSAILLES (FR)

(57) **Abrégé**

Habillage intérieur d'ouvrant de véhicule supportant une caméra.

L'invention porte sur un habillage intérieur d'ouvrant (10) de véhicule, notamment de véhicule automobile (1), l'habillage intérieur comprenant un moyen de réception d'une caméra (50) et/ou un moyen de maintien en position d'une telle caméra (50).

## Description

La présente invention concerne un habillage intérieur d'ouvrant de véhicule. L'invention porte aussi sur un ouvrant comprenant un tel habillage intérieur. L'invention porte aussi sur un véhicule comprenant un tel ouvrant et/ou un tel habillage intérieur. L'invention porte encore sur un procédé d'obtention d'un tel ouvrant.

Un véhicule de l'état de la technique, en particulier un véhicule automobile, est généralement doté d'une caméra placée à l'arrière destinée à filmer l'environnement arrière du véhicule. Ce type de caméra, connu sous son acronyme anglo-saxon « SRVM » pour « Smart Rear View Monitoring », permet ainsi un champ de vision de l'arrière du véhicule, généralement sur un écran disposé au niveau d'un rétroviseur intérieur. Une telle caméra fonctionne alors que le véhicule roule vers l'avant et/ou qu'une vitesse vers l'avant est enclenchée. La caméra est alors agencée généralement en haut d'une porte de coffre de sorte à pouvoir obtenir une vue globale arrière du véhicule.

Seulement l'installation d'une telle caméra est complexe et par conséquent coûteuse.

Le but de l'invention est de fournir un habillage intérieur d'ouvrant de véhicule remédiant aux inconvénients ci-dessus. En particulier, l'invention propose un ouvrant de type porte de coffre, simple, fiable, et aisé à assembler.

Pour atteindre cet objectif, l'invention porte sur un habillage intérieur d'ouvrant de véhicule, notamment de véhicule automobile, l'habillage intérieur comprenant un moyen de réception d'une caméra et/ou un moyen de maintien en position d'une telle caméra.

Le moyen de réception peut comprendre au moins une butée et/ou au moins un guide.

Le moyen de maintien en position peut comprendre un élément flexible, notamment une languette élastique ou sensiblement élastique.

L'habillage intérieur peut être rigide ou sensiblement rigide, notamment à base de matériau de type plastique injecté, notamment du polypropylène ou du polyéthylène.

L'invention porte encore sur un ouvrant, notamment un ouvrant de type porte de coffre de véhicule, notamment de véhicule automobile, comprenant :
- une vitre, notamment une vitre de type lunette arrière,
- une caméra agencée de sorte à filmer à travers la vitre,
l'ouvrant comprenant un habillage intérieur tel que défini précédemment, la caméra étant fixée directement ou sensiblement directement sur l'habillage intérieur.

L'invention porte encore sur un véhicule, notamment un véhicule automobile, comprenant au moins un ouvrant tel que défini précédemment et/ou au moins un habillage intérieur tel que défini précédemment.

L'invention porte encore sur un procédé d'obtention d'un ouvrant, le procédé comprenant une étape de fourniture :
- d'une structure d'ouvrant, notamment d'une structure de porte de coffre,
- d'une caméra,
- d'un habillage intérieur tel que défini précédemment,
suivie d'une étape de fixation de la caméra directement ou sensiblement directement sur l'habillage intérieur puis d'une étape de fixation de l'habillage intérieur sur la structure, ou
suivie d'une étape de fixation de l'habillage intérieur sur la structure puis d'une étape de fixation de la caméra directement ou sensiblement directement sur l'habillage intérieur.

Ces objets, caractéristiques et avantages de la présente invention seront exposés en détail dans la description suivante d'un mode de réalisation d'un véhicule faite à titre non-limitatif en relation avec les figures jointes parmi lesquelles :
[fig.1] La figure 1 est une vue schématique d'un véhicule automobile selon un mode de réalisation de l'invention.
[fig.2] La figure 2 est une vue en perspective d'une porte de coffre de véhicule automobile selon un mode de réalisation de l'invention.
[fig.3] La figure 3 est une vue en coupe partielle de la porte de coffre de véhicule automobile selon le mode de réalisation de l'invention.
[fig.4] La figure 4 est une vue partielle en perspective d'un habillage intérieur d'une porte de coffre de véhicule automobile selon un mode de réalisation de l'invention.

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

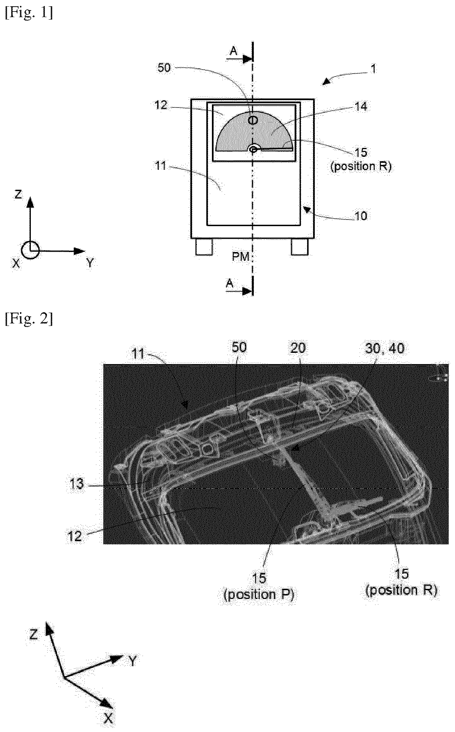

Un véhicule, par exemple un véhicule automobile 1, selon un mode de réalisation de l'invention, est illustré schématiquement sur la figure 1. Le véhicule automobile 1 comprend au moins un ouvrant 10 selon un mode de réalisation de l'invention. De préférence, l'ouvrant 10 comprend au moins une vitre.

Comme illustré sur la figure 1, de préférence, l'ouvrant 10 est une porte de coffre 11. Par exemple, la porte de coffre 11 comprend au moins une vitre, à savoir une lunette arrière 12. La lunette arrière 12 est en verre ou dans un matériau offrant des caractéristiques similaires, par exemple un plastique de préférence transparent ou sensiblement transparent.

Comme illustré sur les figures 1 à 4, la porte de coffre 11 comprend encore une caméra 50 agencée de sorte à pouvoir filmer à travers la lunette arrière 12, vers l'arrière du véhicule. De préférence, la caméra 50 est positionnée de manière à pouvoir filmer à travers une zone de balayage 14 d'au moins un balai essuie-glace arrière 15 destiné à nettoyer au moins partiellement la face extérieure de la lunette arrière 12. De préférence, la caméra 50 est agencée centrée, ou sensiblement centrée, par rapport à un plan médian PM vertical et longitudinal, ou sensiblement vertical et longitudinal, du véhicule automobile 1. La caméra 50 est agencée derrière la lunette arrière 12. Par « derrière la lunette arrière », on entend que la caméra est disposée côté habitacle.

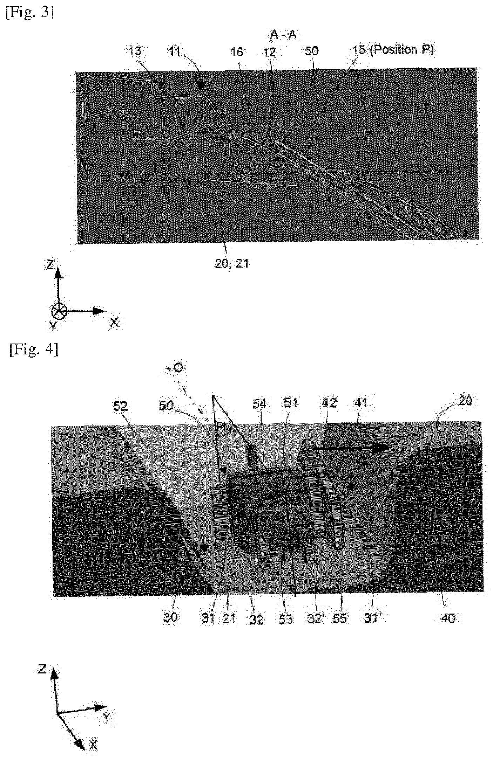

A noter que, sur la figure 1, le balai d'essuie-glace arrière 15 est représenté dans une position R de repos. Sur la figure 2, le balai d'essuie-glace arrière 15 est représenté à la fois dans la position R de repos et dans une position P de passage devant ou au niveau de la caméra, au cours d'un mouvement de balayage. Dans cette position P de passage, le balai s'étend en vis-à-vis, ou sensiblement en vis-à-vis, de la caméra 50. Sur la figure 3, le balai 15 est représenté dans la position P de passage. En effet, dans la position P de passage, l'essuie-glace 15 s'étend au niveau, ou sensiblement au niveau, du plan médian PM du véhicule automobile 1.

A noter que la caméra 50 n'est pas à interpréter comme une caméra dite de recul. Une caméra de recul ne s'active généralement qu'à l'enclenchement d'une marche arrière et/ou que lors d'un déplacement vers l'arrière. En effet, la caméra de recul est généralement agencée en bas d'une porte de coffre et filme principalement les zones basses à proximité (trottoirs, obstacles sur la chaussée, véhicule stationné derrière...) afin d'éviter tout contact du véhicule lors d'une manœuvre de marche arrière telle qu'une manœuvre de stationnement par exemple.

Comme illustré sur la figure 2, la porte de coffre 11 comprend encore un habillage intérieur 20 selon un mode de réalisation de l'invention. De préférence, la caméra 50 est fixée directement ou sensiblement directement sur cet habillage intérieur 20.

Par « directement », on entend que la caméra est au contact de l'habillage intérieur 20. Par « sensiblement directement » on entend qu'un élément s'étend, au moins partiellement, entre l'habillage intérieur 20 et la caméra 50. Cet élément est par exemple un joint, un support, un moyen d'absorption de vibrations. Quoi qu'il en soit c'est l'habillage intérieur 20 qui supporte la caméra 50. Autrement dit, l'habillage intérieur 20 reprend notamment la force de pesanteur agissant sur la caméra.

Comme illustré sur les figures 2 et 3, la porte de coffre 11 comprend encore une structure 13. Cette structure 13 est par exemple en tôle d'acier et/ou d'alliage d'aluminium et/ou en matériau composite. De préférence la lunette arrière 12 est fixée sur la structure 13, par exemple par collage, éventuellement avec interposition d'un joint 16. De préférence, l'habillage comprend un élément ou plusieurs éléments, tels qu'une ou plusieurs garnitures, rapportés sur la structure. Cet habillage a notamment une fonction esthétique et/ou une fonction d'isolation, notamment d'isolation acoustique.

Plus précisément, comme illustré en particulier sur la figure 4, l'habillage intérieur 20 comprend un moyen de réception 30 de la caméra 50 et/ou un moyen de maintien en position 40 de la caméra. Par exemple, le moyen de réception 30 comprend au moins une butée et/ou au moins un guide. De préférence, comme illustré sur la figure 4, le moyen de réception 30 comprend deux butées 31, 31' parallèles ou sensiblement parallèles s'étendant par exemple verticalement ou sensiblement verticalement. Par exemple, en cas de caméra 50 centrée ou sensiblement centrée sur le plan médian PM du véhicule, la butée 31 est agencée à gauche du plan PM et la butée 31' est agencée à droite du plan PM (vue depuis l'arrière du véhicule). Par exemple les deux butées sont parallélépipédiques ou sensiblement parallélépipédiques. Chaque butée vient au contact ou sensiblement au contact d'une face latérale 52 de la caméra. A noter que seule la face latérale 52 gauche de la caméra est illustrée. Toutefois, la caméra est dotée également d'une face latérale droite venant au contact de la butée 31'.

En outre, la caméra comprend de préférence une partie cylindrique 53, d'axe O longitudinal et horizontal, ou sensiblement longitudinal et horizontal, dotée d'une gorge 54, de préférence à proximité d'une partie objectif 55 de la caméra.

De préférence, le moyen de réception 30 comprend encore deux guides 32, 32' parallèles ou sensiblement parallèles s'étendant par exemple verticalement ou sensiblement verticalement. Par exemple les deux guides sont parallélépipédiques ou sensiblement parallélépipédiques. Comme il sera expliqué par la suite, les guides 32, 32' coopèrent avec la gorge 54 de sorte à réceptionner et positionner la caméra sur l'habillage intérieur 20. Ainsi, l'épaisseur des guides selon la direction longitudinale est égale, ou sensiblement égale, à l'épaisseur de la gorge 54 selon la direction longitudinale.

Comme illustré sur la figure 4, par exemple, le moyen de maintien en position 40 comprend un élément flexible. Par exemple cet élément flexible est, ou comprend, une languette 41 élastique ou sensiblement élastique. De préférence, la languette 41 comprend une dent ou cran 42 apte à venir s'appuyer contre une face supérieure 51 de la caméra de sorte à assurer un maintien en position ferme.

Comme évoqué précédemment, l'habillage intérieur 20 assure lui-même la fonction support de la caméra. De préférence, l'habillage intérieur est rigide ou sensiblement rigide. Par exemple, il est obtenu à base de matériau de type plastique, de préférence du plastique injecté, par exemple du polypropylène et/ou du polyéthylène.

Un mode d'exécution d'un procédé d'obtention d'une porte de coffre 11 est décrit ci-après.

Le procédé comprend une étape de fourniture :
- d'une structure 13 de porte de coffre 11,
- d'une caméra 50,
- d'un habillage intérieur 20
suivie d'une étape de fixation de la caméra 50 directement, ou sensiblement directement, sur l'habillage intérieur 20 puis d'une étape de fixation de l'habillage intérieur 20 sur la structure 13.

Alternativement, le procédé comprend une étape de fourniture :
- d'une structure 13 de porte de coffre 11,
- d'une caméra 50,
- d'un habillage intérieur 20
suivie d'une étape de fixation de l'habillage intérieur 20 sur la structure 13 puis d'une étape de fixation de la caméra 50 directement, ou sensiblement directement, sur l'habillage intérieur 20.

Par exemple, la fixation de l'habillage intérieur 20 sur la structure 13 se fait par vissage et/ou par clipsage et/ou par emboîtage.

La fixation de la caméra sur l'habillage intérieur est réalisée de préférence en deux temps.

Dans un premier temps, on a recours au moyen de réception 30. En effet, comme illustré sur la figure 4, la caméra est insérée et/ou translatée de sorte à ce que ses faces latérales 52 viennent entre les butées 31, 31'. Simultanément ou sensiblement simultanément, les deux guides 32, 32' se translatent au sein de la gorge 54 de la caméra. Par exemple, cette translation est réalisée de haut en bas selon la direction verticale, ou sensiblement selon cette direction. Avantageusement, cette translation ou déplacement se termine lorsque la caméra vient en butée contre une surface inférieure 21 de la garniture ou habillage intérieur 20. A noter qu'au cours de ce premier temps permettant la mise en position de la caméra par rapport à l'habillage intérieur 20, de préférence la languette élastique 41 est maintenue sous contrainte pour ne pas qu'elle entrave le déplacement de la caméra. Cette contrainte C, illustrée par une flèche sur la figure 4, est dirigée selon la direction transversale ou sensiblement selon cette direction, vers la droite, du fait que la languette 41 soit agencée à droite de la caméra. En cas de languette agencée à gauche de la caméra, la contrainte sur la languette permettant la mise en position de la caméra serait alors dirigée vers la gauche.

Dans un deuxième temps, on a recours au moyen de maintien en position 40. En pratique, une fois la caméra en butée contre la surface inférieure 21, il suffit de supprimer la contrainte C pour laisser la languette 41 revenir élastiquement vers la caméra 50. De préférence, la languette 41 et/ou son cran 42, sont dimensionnés et/ou positionnés et/ou conçus de sorte à venir au contact de la face supérieure 51 suite au relâchement de la contrainte C. Avantageusement, la languette 41, en particulier son cran 42, demeure au contact de la face supérieur 51 et assure un maintien en position durable et fiable tout en évitant un déplacement vertical vers le haut de la caméra 50.

Si besoin, pour dissocier la caméra 50 de l'habillage intérieur 20, la mise sous contrainte C de la languette 41 permet d'offrir un degré de liberté à la caméra selon la direction verticale ou sensiblement verticale dans le mode de réalisation illustré.

Ainsi, dans le mode de réalisation illustré, grâce à la butée 31, tous déplacements ou vibrations de la caméra selon la direction transversale ou sensiblement transversale vers la gauche sont atténués voire annulés. Grâce à la butée 31', tous déplacements ou vibrations de la caméra selon la direction transversale ou sensiblement transversale vers la droite sont atténués voire annulés. Le jeu entre la caméra et les butées 31, 31' est de préférence faible voire nul ou sensiblement nul. Grâce aux guides 32, 32' tous déplacements ou vibrations de la caméra selon la direction longitudinale ou sensiblement longitudinale, aussi bien vers l'arrière que vers l'avant, sont atténués voire annulés. En effet, comme précisé ci-dessus les guides 32, 32' viennent s'insérer au sein de la gorge 54, de préférence avec un jeu faible voire nul ou sensiblement nul. Ainsi, les guides 32 et les butées 31 assurent un positionnement précis de la caméra 50. Grâce à la languette 41, même en cas de vibrations, notamment dues à une chaussée comprenant des « nids de poules » ou autres imperfections ou encore un choc de type accrochage, la caméra 50 demeure en place et les images transmises sur l'écran sont de bonne qualité. L'écran est par agencé sur ou au niveau d'un rétroviseur intérieur du véhicule automobile 1.

Par exemple, la porte de coffre selon le mode de réalisation illustré est à ouverture pivotante autour d'un axe vertical, par exemple agencé à proximité d'un bord droit ou gauche de la face arrière de la caisse. Par exemple, la porte de coffre selon le mode de réalisation illustré est à ouverture pivotante autour d'un axe horizontal, par exemple agencé en haut de la face arrière de la caisse du véhicule.

Alternativement, le véhicule comprend par exemple deux portes de coffre pivotante autour d'axes verticaux ou autour d'axes horizontaux.

Par exemple les deux portes de coffre ont la même largeur selon la direction transversale ou sensiblement la même largeur. Dans ce cas au moins l'une des portes comprend une lunette arrière et la caméra n'est pas centrée ou sensiblement centrée par rapport au plan médian PM du véhicule. Quels que soient le type et le nombre de portes arrière, la caméra 50 est agencée derrière une lunette arrière et est supportée par l'habillage intérieure d'une porte comprenant cette lunette arrière.

En résumé, la caméra de rétro-vision 50 est fixée dans la garniture 20 de la porte de coffre 11. L'implantation se fait, au sein de l'habitacle, derrière la lunette 12, de préférence en zone essuyée 14 du bras balai 15. L'habillage intérieur est particulièrement rigide et garantit la raideur de la partie de l'habillage où se trouvent les butées et guides. La caméra est alors fixée sans jeu ou sensiblement sans jeu ce qui permet d'éviter toute vibration de la caméra par rapport à l'habillage intérieur.

Cette solution permet d'utiliser un même type de lunette arrière que le véhicule dispose ou non d'une caméra. En effet, la fixation de la caméra est indépendante de la lunette arrière. En outre, cette solution ne requiert pas de pièce supplémentaire. De préférence, la caméra est implantée tout en haut de la lunette ce qui engendre un plus grand champ de vision arrière. Ainsi, le champ de vision arrière s'en trouve optimisé en particulier en étant dépourvu d'obstruction transversale. De préférence, la caméra est agencée, selon la direction verticale, à une hauteur au moins égale à celle des yeux du conducteur. Alternativement, la caméra peut être agencée sur une autre zone que le haut de la porte de coffre.

En outre, les coûts d'une solution telle que décrite sont réduits.

Grâce à une telle solution, même en cas de véhicules plongeants à l'arrière, par exemple pour des problématiques d'aérodynamique et/ou de design, et par conséquent de lunettes arrière de petites dimensions, les occupants du véhicule bénéficient d'une vue de l'environnement arrière. Il en résulte un champ de vision arrière optimum via l'écran retransmettant les images de la caméra ce qui améliore la sécurité.

En remarque, la solution atteint donc l'objet recherché de permettre d'installer aisément une caméra, connue sous son acronyme anglo-saxon « SRVM » pour « Smart Rear View Monitoring », sur un ouvrant de véhicule et présente les avantages suivants
- Elle offre un gain de temps au cours de l'assemblage de la porte;
- Elle peut être appliquée à tous les types de véhicules automobiles, quelle que soit leur gamme ;
- Les moyens de réception et/ou de maintien en position de la caméra peuvent comprendre au moins un détrompeur de sorte à éviter tout montage erroné de la caméra ;
- Elle peut être appliquée à d'autres véhicules ou moyens de transport susceptibles d'être équipés d'au moins une porte, en particulier une porte arrière.

Bien que le mode de réalisation décrit ne concerne qu'un ouvrant doté d'une vitre, un ouvrant dépourvu de vitre peut comprendre un tel habillage intérieur supportant une caméra. Dans ce cas, un orifice, éventuellement obstrué par un moyen transparent, est agencé sur la structure de l'ouvrant. L'orifice est alors en vis-à-vis de la caméra et permet à la caméra de filmer l'environnement arrière du véhicule.

## Revendications

1. Habillage intérieur (20) d'ouvrant (10) de véhicule, notamment de véhicule automobile (1), **caractérisé en ce que** l'habillage intérieur (20) comprend un moyen de réception (30) d'une caméra (50) et/ou un moyen de maintien en position (40) d'une telle caméra (50).

2. Habillage intérieur (20) selon la revendication précédente, **caractérisé en ce que** le moyen de réception (30) comprend au moins une butée (31) et/ ou au moins un guide (32).

3. Habillage intérieur (20) selon l'une des revendications précédentes, **caractérisé en ce que** le moyen de maintien en position (40) comprend un élément flexible, notamment une languette (41) élastique ou sensiblement élastique.

4. Habillage intérieur (20) selon l'une des revendications précédentes, **caractérisé en ce que** l'habillage intérieur (20) est rigide ou sensiblement rigide, notamment à base de matériau de type plastique injecté, notamment du polypropylène ou du polyéthylène.

5. Ouvrant (10), notamment ouvrant de type porte de coffre (11) de véhicule, notamment de véhicule automobile (1), comprenant :
- une vitre, notamment une vitre de type lunette arrière (12),
- une caméra (50) agencée de sorte à filmer à travers la vitre, **caractérisé en ce que** l'ouvrant (10) comprend un habillage intérieur (20) selon l'une des revendications précédentes, la caméra (50) étant fixée directement ou sensiblement directement sur l'habillage intérieur (20).

6. Véhicule, notamment véhicule automobile (1), **caractérisé en ce qu'**il comprend au moins un ouvrant (10) selon la revendication précédente et/ou au moins un habillage intérieur (20) selon l'une des revendications 1 à 4.

7. Procédé d'obtention d'un ouvrant (10), **caractérisé en ce que** le procédé comprend une étape de fourniture :
- d'une structure (13) d'ouvrant (10), notamment d'une structure (13) de porte de coffre (11),
- d'une caméra (50),
- d'un habillage intérieur (20) selon l'une des revendications 1 à 4, suivie d'une étape de fixation de la caméra (50) directement ou sensiblement directement sur l'habillage intérieur (20) puis d'une étape de fixation de l'habillage intérieur (20) sur la structure (13), ou suivie d'une étape de fixation de l'habillage intérieur (20) sur la structure (13) puis d'une étape de fixation de la caméra (50) directement ou sensiblement directement sur l'habillage intérieur (20).
